# EUROPÄISCHE PATENTANMELDUNG

(11) **EP 0 959 619 A2**
(43) Veröffentlichungstag der Anmeldung: **24.11.1999**
(21) Anmeldenummer: 99201439.9
(22) Anmeldetag: 07.05.1999
(51) Int. Cl.: H04N 5/265

(54) **Video-Mischer**

(30) Priorität: 16.05.1998 DE 19822101
(71) Anmelder: Philips Patentverwaltung GmbH, 22335 Hamburg (DE); Koninklijke Philips Electronics N.V., 5621 BA Eindhoven (NL)
(72) Erfinder: Grzibek, Rolf, c/o Philips Patentverwaltung GmbH, 22335 Hamburg (DE)
(74) Vertreter: von Laue, Hanns-Ulrich, Dipl.-Ing.

(57) **Zusammenfassung**

Bei einem Video-Mischer (1), bei welchem zur Durchführung eines Mischvorgangs an einem dem Mischer (1) zugeführten Videosignal eine zu mischende Video-Komponente des Videosignals und ein Misch-Typ vorwählbar sind, ist zur möglichen Steuerung einer zusätzlichen externen Funktion an dem Video-Mischer eine solche Funktion anwählbar, welche aus zusätzlichen externen Funktionen auswählbar ist, und daß der Video-Mischer (1) während eines Mischvorgangs zur Steuerung einer angewählten externen Funktion ein Steuersignal generiert, welches im Verlaufe des Mischvorgangs eine Veränderung von einem ersten Extremwert zu einem zweiten Extremwert durchläuft und einer Steuerung der angewählten externen Funktion dient, wobei ein Ausgangswert einer Variation der externen Funktion dem ersten Extremwert des Steuersignals und ein Endwert der Variation der externen Funktion dem zweiten Extremwert des Steuersignals zugeordnet ist.

## Beschreibung

Die Erfindung betrifft einen Video-Mischer, bei welchem zur Durchführung eines Mischvorgangs an einem dem Mischer zugeführten Videosignal eine zu mischende Video-Komponente des Videosignals und ein Misch-Typ vorwählbar sind.

Bei derartigen Video-Mischern besteht die Möglichkeit, zur Durchführung eines Mischvorganges wenigstens eine Komponente des Videosignals auszuwählen, die dem Mischvorgang nachfolgend unterzogen wird. Es können beispielsweise Vordergrundsignal, Hintergrundsignal oder Chromakey des Videosignals ausgewählt werden. An dem oder den ausgewählten Signalen des Videosignals wird dann nach dessen Auslösung der Mischvorgang ausgeführt, dessen Art ebenfalls vorwählbar ist.

Es ist Aufgabe der Erfindung, einen derartigen Mischer dahingehend weiterzuentwickeln, daß eine zusätzliche Funktion mittels des Mischers steuerbar ist, wobei diese Funktion zeitlich parallel zu dem eigentlichen Mischvorgang, den der Mischer durchführt, ablaufen soll.

Diese Aufgabe ist erfindungsgemäß dadurch gelöst, daß an dem Video-Mischer eine zusätzliche externe Funktion anwählbar ist, welche aus vorgegebenen zusätzlichen externen Funktionen auswählbar ist, und daß der Video-Mischer während eines Mischvorgangs zur Steuerung einer angewählten externen Funktion ein Steuersignal generiert, welches im Verlaufe des Mischvorgangs eine Veränderung von einem ersten Extremwert zu einem zweiten Extremwert durchläuft und einer Steuerung der angewählten externen Funktion dient, wobei ein Ausgangswert einer Variation der externen Funktion dem ersten Extremwert des Steuersignals und ein Endwert der Variation der externen Funktion dem zweiten Extremwert des Steuersignals zugeordnet ist.

Aus einer Liste vorgegebener zusätzlicher externer Funktionen ist wenigstens eine Funktion auswählbar. Diese zusätzliche externe Funktion ist vor Durchführung eines Mischvorgangs anwählbar, so daß sie nachfolgend bei Durchführung des Mischvorgangs ebenfalls ausgeführt wird.

Diese Steuerung wird mittels eines Steuersignals vorgenommen, welches der Mischer generiert und welches die angewählte zusätzliche externe Funktion auslöst und steuert. Je nach Art der ausgewählten zusätzlichen externen Funktion wird das Steuersignal in geeigneter Weise bzw. in angepaßter Weise generiert.

Während des Mischvorgangs durchläuft das Steuersignal Signalwerte zwischen einem ersten Extremwert und einem zweiten Extremwert. Dem ersten Extremwert ist ein Ausgangswert der variablen externen Funktion und dem zweiten Extremwert ein Endwert dieser Variation zugeordnet. Damit ist eine kontinuierliche Variation der externen Funktion zwischen dem Anfangswert und dem Endwert in Abhängigkeit des Wertes des Steuersignals, welches sich zwischen den beiden Extremwerten verändert, durchführbar. Es können aufdiese Weise also kontinuierlich verlaufende externe Funktionen gesteuert werden.

Außerdem wird damit erreicht, daß die externe Funktion zeitlich synchronisiert mit dem Mischvorgang abläuft und daß die Variation der externen Funktion zwischen einem gewünschten Ausgangswert und einem Endwert verläuft. Die Auslösung und Steuerung der externen Funktion benötigt vom Bediener, außer deren vorheriger Auswahl und Anwahl, keine weiteren Bedienschritte.

Wie nach Anspruch 2 vorgesehen ist, wird die externe Funktion im Regelfall zusätzlich zu einer Mischfunktion angewählt und durchgeführt. Es besteht jedoch auch die Möglichkeit, wie dies gemäß Anspruch 3 vorgesehen ist, die externe Funktion ausschließlich durchzuführen, also ohne eine Komponente des Videosignals vorgewählt zu haben, an der ein Mischvorgang durchgeführt würde.

Bei einer weiteren Ausgestaltung der Erfindung gemäß Anspruch 4 wird die externe Funktion vorteilhaft proportional zu dem sich ändernden Wert des Steuersignals variiert, so daß auch der Verlauf der Variation der externen Funktion durch das Steuersigna beeinflußbar ist. Dies kann beispielsweise dazu eingesetzt werden, zu einer Bildüberblendung durch den Mischer als zusätzlich externe Funktion einen zu dieser synchron ablaufende Tonüberblendung durchzuführen. Auch könnte beispielsweise ein bestimmter Audioclip während des Mischvorgangs zeitsynchron abgespielt werden.

Vorteilhaft wird durch das Steuersignal, wie gemäß einer weiteren Ausgestaltung der Erfindung gemäß Anspruch 5 vorgesehen ist, ein externes Gerät angesteuert, das seinerseits die zusätzliche externe Funktion in Abhängigkeit des Steuersignals durchführt.

Dabei kann es sich vorteilhaft um die gemäß den Ansprüchen 6 bis 10 vorgesehenen externen Geräte handeln. In jedem Falle ist durch die Erfindung sichergestellt, daß die gewünschte externe Funktion zum gewünschten Zeitpunkt, synchronisiert mit dem Mischvorgang und mit dem gewünschten Verlauf abläuft.

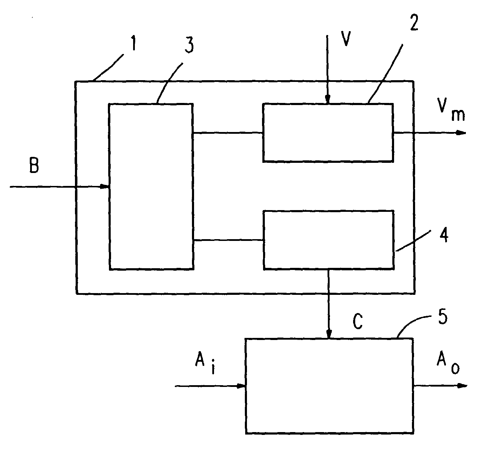

Nachfolgend wird ein Ausführungsbeispiel der Erfindung anhand der Zeichnung erläutert.

Die einzige Figur der Zeichnung zeigt in schematischer Weise einen erfindungsgemäßen Mischer 1, mittels dessen ein externes Gerät 5 steuerbar ist.

Der externe Mischer 1 ist durch einen Bediener B steuerbar. Der Bediener kann für einen vorzunehmenden Mischvorgang eine in der Figur nicht näher angedeutete Komponente eines Videosignals V auswählen, die einem Mischvorgang unterzogen werden soll. Es können beispielsweise Vordergrundsignal, Hintergrundsignal oder Chromakey des Videosignals auswählbar sein.

Es ist ferner vorwählbar, welche Art von Mischvorgang an dieser Komponente erfolgen soll. Beispielsweise kann ein weicher Blendenvorgang oder verschiedene Arten von anderen Blenden auswählbar sein.

Erfindungsgemäß ist eine weitere externe Funktion aus einer Liste vorgegebener externer Funktionen auswählbar. Ist diese zusätzliche externe Funktion für einen Mischvorgang angewählt, so wird diese Funktion bei dem Mischvorgang synchron zu diesem zusätzlich gesteuert.

Die oben beschriebene Auswahl der Videokomponente und der Art des Mischvorgangs bewirkt in dem Mischer gemäß der Figur, daß dessen Steuerung 3 ein entsprechendes Signal an eine Mischstufe 2 gibt, welcher die Komponenten des Videosignals V zugeführt werden und welche bei Auslösung eines Mischvorgangs die ausgewählte Komponente des Videosignals V dem Mischvorgang einer ausgewählten Art unterzieht und als gemischtes Videosignal (bzw. gemischte Komponente des Videosignals) Vₘ ausgibt.

Vielfach besteht der Wunsch, parallel und zeitlich synchronisiert zu diesem Mischvorgang eine zusätzliche Funktion auszulösen. Dabei kann es sich beispielsweise um eine Audioüberblendung, Abspielen eines Audioclips, Auslösen eines anderen Mischvorgangs, Steuerung einer Videokamera oder Ähnliches handeln. Zur Durchführung einer derartigen zusätzlichen Funktion ist vom Bediener B aus einer Liste vorgegebener Funktionen die gewünschte Funktion auswählbar. Ist diese Funktion für einen nachfolgend vorzunehmenden Mischvorgang angewählt, gibt die Steuerung 3 des Mischers 1 ein entsprechendes Signal an eine ebenfalls in dem Mischer 1 vorgesehene Funktionssteuerung 4, welcher ein Steuersignal C generiert, welches dem externen Gerät 5 zugeführt wird. Das externe Gerät 5 führt dann während des Mischvorgangs gesteuert durch das Steuersignal C die zusätzliche externe Funktion aus.

Bei dem externen Gerät kann es sich je nach Art der externen Funktion beispielsweise um einen digitalen Video-Editor, einen Slow-Motion-Rekorder, einen Text-Generator ein Audio-Gerät, die Optik einer Videokamera oder andere Geräte handeln.

Mittels der Werte, die das Steuersignal C annimmt, ist eine derartige zusätzliche Funktion nicht nur auslösbar, sondern auch in ihrem Verlaufsteuerbar bzw. beeinflußbar. Dazu verändert sich der Wert des Steuersignals C zwischen einem ersten und einem zweiten Extremwert. Diesen beiden Extremwerten sind ein Ausgangswert und ein Endwert der externen Funktion zugeordnet. Verändert sich das Steuersignal C zwischen dem ersten und dem zweiten Extremwert, so wird die externe Funktion gesteuert durch dieses Steuersignal C zwischen dem Anfangswert und dem Endwert kontinuierlich verändert. Damit ist durch den Verlauf des Wertes des Steuersignals die Funktion nicht nur steuerbar, sondern auch in ihrer Größe bzw. in ihrem Verlauf beeinflußbar.

Ist als externes Gerät beispielsweise ein Audiogerät vorgesehen und ist als zusätzliche externe Funktion ein Abspielen eines Audoclips angewählt, so kann bei Durchführung eines Mischvorgangs mittels der Mischstufe 2 des Video-Mischers 1 zeitlich synchron und mit dem gewünschten Start- und Endwerten der Audioclip abgespielt werden. Durch den Verlauf der Werte des Steuersignals ist damit sichergestellt, daß während des Mischvorgangs zu jedem Zeitpunkt jeweils die gewünschte Phase des Audioclips abgespielt wird.

Entsprechendes gilt auch für andere externe Funktionen, die mittels des Steuersignals anwählbar und steuerbar sind. Durch den erfindungsgemäßen Mischer ist es also möglich, eine zusätzliche externe Funktion einer auswählbaren Art, synchronisiert mit einem Video-Mischvorgang ablaufen zu lassen, wobei Anfangs- und Entwerte der externen Funktion durch entsprechende Werte des Steuersignals vorgebbar sind.

## Patentansprüche

1. Video-Mischer (1), bei welchem zur Durchführung eines Mischvorgangs an einem dem Mischer (1) zugeführten Videosignal eine zu mischende Video-Komponente des Videosignals und ein Misch-Typ vorwählbar sind,
dadurch gekennzeichnet,
daß an dem Video-Mischer (1) eine zusätzliche externe Funktion anwählbar ist, welche aus vorgegebenen zusätzlichen externen Funktionen auswählbar ist, und daß der Video-Mischer (1) während eines Mischvorgangs zur Steuerung einer angewählten externen Funktion ein Steuersignal generiert, welches im Verlaufe des Mischvorgangs eine Veränderung von einem ersten Extremwert zu einem zweiten Extremwert durchläuft und einer Steuerung der angewählten externen Funktion dient, wobei ein Ausgangswert einer Variation der externen Funktion dem ersten Extremwert des Steuersignals und ein Endwert der Variation der externen Funktion dem zweiten Extremwert des Steuersignals zugeordnet ist.

2. Video-Mischer nach Anspruch 1, dadurch gekennzeichnet, daß bei Durchführung eines Mischvorgangs an einer ausgewählten Video-Komponente auch die ausgewählte zusätzliche externe Funktion mittels des Steuersignals gesteuert wird.

3. Video-Mischer nach Ansrpuch 1, dadurch gekennzeichnet, daß auch ohne Auswahl einer Video-Komponente bei Auslösung eines Mischvorgangs die ausgewählte zusätzliche externe Funktion mittels des Steuersignals gesteuert wird.

4. Video-Mischer nach Anspruch 1, dadurch gekennzeichnet, daß die Variation der externen Funktion proportional zu dem sich ändernden Wert des Steuersignals vorgenommen wird.

5. Video-Mischer nach Anspruch 1, dadurch gekennzeichnet, daß mittels des Steuersignals ein externes Gerät (5) steuerbar ist.

6. Video-Mischer nach Anspruch 1, dadurch gekennzeichnet, daß als zusätzliche externe Funktion eine Steuerung einer Anordnung zum digitalen Editieren eines Videosignals vorgesehen ist.

7. Video-Mischer nach Anspruch 1, dadurch gekennzeichnet, daß als zusätzliche externe Funktion ein Slow-Motion-Rekorder steuerbar ist, insbesondere eine Geschwindigkeitssteuerung oder eine Positionierung dieses Rekorders.

8. Video-Mischer nach Anspruch 1, dadurch gekennzeichnet, daß als zusätzliche externe Funktion ein Text-Generator steuerbar ist.

9. Video-Mischer nach Anspruch 1, dadurch gekennzeichnet, daß als zusätzliche externe Funktion Audio-Effekte steuerbar sind.

10. Video-Mischer nach Anspruch 1, dadurch gekennzeichnet, daß als zusätzliche externe Funktion eine Steuerung einer Kamera vornehmbar ist, insbesondere eine Brennweitensteuerung von deren Optik.
